# EUROPEAN PATENT SPECIFICATION

(11) **EP 3 994 851 B1**
(45) Date of publication and mention of the grant of the patent: **23.10.2024**
(21) Application number: 20834927.4
(22) Date of filing: 02.07.2020
(51) Int. Cl.: H04W 4/70

(54) **METHODS AND APPARATUSES FOR NON-IP DATA DELIVERY**
VERFAHREN UND VORRICHTUNGEN ZUR NICHT-IP-DATENÜBERTRAGUNG
PROCÉDÉS ET APPAREILS DE DISTRIBUTION DE DONNÉES NON IP

(30) Priority: 04.07.2019 WO PCT/CN2019/094756
(43) Date of publication of application: 11.05.2022
(73) Proprietor: Telefonaktiebolaget LM Ericsson (publ), 164 83 Stockholm (SE)
(72) Inventor: WASS, Mikael, 511 69 Saetila (SE); XU, Wenliang, Shanghai 200335 (CN)
(74) Representative: Zacco Sweden AB
(86) International application number: PCT/CN2020/099926
(87) International publication number: WO 2021/000915

(56) References cited:
- WO-A1-2018/200218
- CN-A- 107 925 631
- CN-A- 109 155 909
- CONVIDA WIRELESS LLC ET AL: "Reliable Data Service Configuration", vol. SA WG2, no. Ljublijana, Slovenia; 20171023 - 20171027, 17 December 2017 (2017-12-17), XP051366551, Retrieved from the Internet <URL:http://www.3gpp.org/ftp/Meetings%5F3GPP%5FSYNC/SA/Docs/> [retrieved on 20171217]
- INTEL ET AL: "Adding port numbers for RDS", vol. CT WG3, no. Reno, USA; 20171127 - 20171201, 4 December 2017 (2017-12-04), XP051368121, Retrieved from the Internet <URL:http://www.3gpp.org/ftp/tsg%5Fct/WG3%5Finterworking%5Fex%2DCN3/TSGC3%5F93%5FReno/Docs/> [retrieved on 20171204]
- ANONYMOUS: "Universal Mobile Telecommunications System (UMTS); LTE; 5G; T8 reference point for Northbound APIs (3GPP TS 29.122 version 15.0.0 Release 15)", ETSI TS 129 122 V15.0.0, vol. 3GPP CT, no. V15.0.0, July 2018 (2018-07-01), pages 1 - 251, XP014329962
- QUALCOMM INCORPORATED ET AL.: "Update of association between application and existing PDU session", 3GPP TSG-CT WG1 MEETING #116, C1-192089, 12 April 2019 (2019-04-12), XP051705287

## Description

### Technical Field

Embodiments of the disclosure generally relate to communication, and, more particularly, to methods and apparatuses for non-Internet protocol (IP) data delivery.

### Background

This section introduces aspects that may facilitate better understanding of the present disclosure. Accordingly, the statements of this section are to be read in this light and are not to be understood as admissions about what is in the prior art or what is not in the prior art.

Non-IP data delivery (NIDD) is specified in clause 4.5.14 of 3rd generation partnership project (3GPP) technical specification (TS) 23.682. Functions for NIDD may be used to handle mobile originated (MO) and mobile terminated (MT) communication with user equipments (UEs). The data used for the communication is considered unstructured from the evolved packet system (EPS) standpoint (which may also be referred to as non-IP). The support of non-IP data is part of the cellular Internet of things (CIoT) EPS optimizations. The non-IP data delivery to service capability server (SCS)/application server (AS) may be accomplished by one of two mechanisms: delivery using service capability exposure function (SCEF) and delivery using a point-to-point (PtP) SGi tunnel.

The delivery using a PtP SGi tunnel is further described in 3GPP TS 23.401. NIDD via the SCEF is handled using a packet data network (PDN) connection to the SCEF. The UE may obtain a non-IP PDN connection to the SCEF either during the Attach procedure (see TS 23.401, clause 5.3.2.1) or via UE requested PDN connectivity (see TS 23.401, clause 5.10.2) or via packet data protocol (PDP) Context Activation procedure (see TS 23.060, clause 9.2.2.1). Note that the UE is not made aware that a particular non-IP PDN connection is provided via SCEF or via PDN gateway (PGW). However, the network informs the UE whether a particular non-IP PDN connection uses control plane CIoT optimization (see TS 23.401).

Document XP051366551 by CONVIDA WIRELESS discloses that the "Reliable Data Service Configuration" in the MT and MO NIDD procedures is used to identify the application on the originator and to identify the application on the receiver.

### Summary

The invention is defined by the subject matter of the independent claims. Advantageous enhancements are subject to the dependent claims.

### Brief Description of the Drawings

These and other objects, features and advantages of the disclosure will become apparent from the following detailed description of illustrative embodiments thereof, which are to be read in connection with the accompanying drawings.
FIG. 1 illustrates an example for two PDN connections of the same APN in the existing NIDD solution;
FIG. 2 illustrates the problem with the existing NIDD solution of FIG. 1;
FIG. 3 is a diagram showing an exemplary communication system into which an embodiment of the disclosure is applicable;
FIG. 4 is a flowchart illustrating a method implemented at a network exposure node according to an embodiment of the disclosure;
FIG. 5 is a flowchart illustrating a method implemented at an application related node according to an embodiment of the disclosure;
FIG. 6 is a flowchart illustrating an exemplary process according to an embodiment of the disclosure;
FIG. 7 is a flowchart illustrating an exemplary process according to an embodiment of the disclosure;
FIG. 8 is a flowchart illustrating an exemplary process according to an embodiment of the disclosure;
FIG. 9 is a flowchart illustrating an exemplary process according to an embodiment of the disclosure;
FIG. 10 is a diagram illustrating an exemplary process according to an embodiment of the disclosure;
FIG. 11 is a block diagram showing an apparatus suitable for use in practicing some embodiments of the disclosure;
FIG. 12 is a block diagram showing a network exposure node according to an embodiment of the disclosure; and
FIG. 13 is a block diagram showing an application related node according to an embodiment of the disclosure.

### Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

For NIDD via SCEF, an association between an SCS/AS and a PDN connection to the SCEF needs to be established to enable transfer of non-IP data between the UE and the SCS/AS. When the Reliable Data Service (RDS) is not enabled, the SCEF determines the association based on provisioned policies that may be used to map an SCS/AS identity and user identity to an access point name (APN). When the RDS is enabled, the SCEF determines the association based on port numbers and provisioned policies that may be used to map SCS/AS identities and user identity to an APN (see TS 23.682, clause 4.5.14.3). Note that when more than one SCS/AS is associated with the same PDN connection, it is permissible for packets to or from one port number to be associated with more than one SCS/AS. Also, any polices that are applied to the PDN connection (e.g. APN rate control), apply to traffic from all of the SCS/AS's that are associated with the PDN connection.

NIDD via SCEF uses the User Identity, APN, and the SCS/AS identity to identify which UE a particular T6a/T6b connection belongs to. The User Identity is the user's international mobile subscriber identification number (IMSI). The user's IMSI shall not be used on the interface between SCEF and SCS/AS. In order to perform NIDD configuration or to send or receive NIDD data, the SCS/AS shall use MSISDN or External Identifier to identify the user. In order to facilitate correlation of SCS/AS requests to T6a/T6b connection for a given UE, the home subscriber server

(HSS) provides to the SCEF (see NIDD Configuration procedure in clause 5.13.2 of TS 23.682) the user's IMSI, and if available, the MSISDN (when NIDD Configuration Request contains an External Identifier) or if available, External Identifier (when NIDD Configuration Request contains an MSISDN). The term MSISDN refers to mobile subscriber international integrated services digital network (ISDN) number.

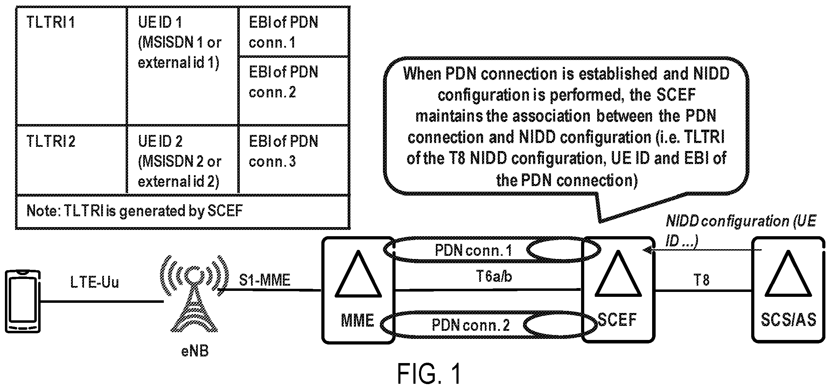

The EPS system supports multiple PDN connections towards the same APN. In case of non-IP, the multiple PDN connections are anchored in the same SCEF, as shown in FIG. 1. The SCEF holds the correlation between EPS bearer identity (ID), UE ID and T8 long term transaction reference ID (TLTRI) in NIDD configuration and determines which EPS bearer the MT NIDD should be delivered to, as mentioned in clause 5.13.2 of TS 23.682:
The SCEF sends an NIDD Configuration Response (TLTRI, Maximum Packet Size, Reliable Data Service Indication, and Cause) message to the SCS/AS to acknowledge acceptance of the NIDD Configuration Request and the deletion of the identified NIDD configuration, if it was requested. If the NIDD Configuration was accepted, the SCEF will create an association between the TLTRI, External Group Identifier or External Identifier or MSISDN, IMSI, and EBI of the non-IP PDN connection. In the MT NIDD procedure, the SCEF will use TLTRI and External Group Identifier or External Identifier or MSISDN to determine the IMSI(s) and EBI(s) of the non-IP PDN connection(s). In the MO NIDD procedure, the SCEF will use the IMSI(s) and EBI(s) to obtain the TLTRI, External Identifier or MSISDN.

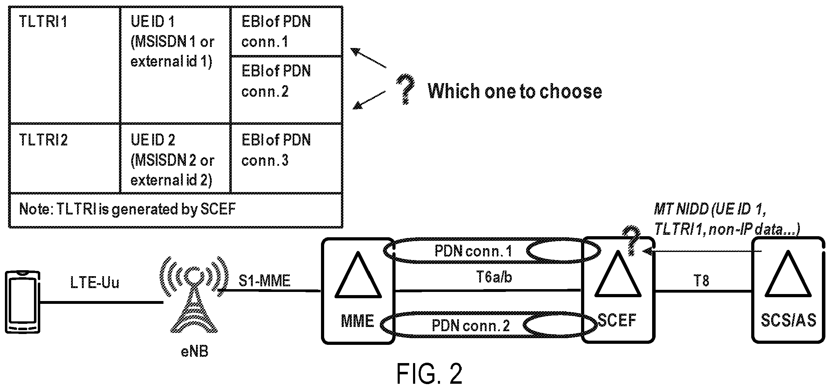

As shown in FIG. 2, if multiple non-IP PDN connections towards the same APN apply, there are multiple EPS bearer IDs (EBIs) for the same UE and the SCEF does not know exactly which EPS bearer the MT NIDD should be delivered to. Consequently, the MT NIDD may be delivered to a wrong application in the UE. Furthermore, the charging data may be recorded for the wrong PDN connection (e.g. see control plane data transfer (CPDT)-service capability exposure (SCE)-charging data record (CDR)/CPDT-serving network name (SNN)-CDR in TS 32.253).

The same issue also exists in 5th generation core (5GC) as well. In this case, the SCEF is replaced by a network exposure function (NEF), the APN is replaced by a combination of data network name (DNN) and network slice selection assistance information (NSSAI), the PDN connection is replaced by a PDU session, and the SCS/AS is replaced by an AF.

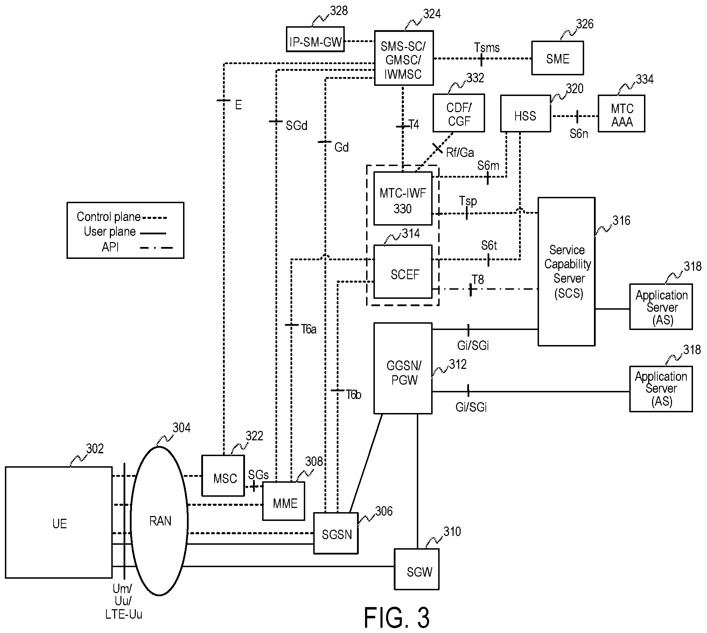

The present disclosure proposes an improved solution for NIDD. Hereinafter, the solution will be described in detail with reference to FIGs. 3-13.

As used herein, the term "communication system" refers to a system following any suitable communication standards, such as the first generation (1G), 2G, 2.5G, 2.75G, 3G, 4G, 4.5G, 5G communication protocols, and/or any other protocols either currently known or to be developed in the future. Furthermore, the communications between a terminal device and a network node in the communication system may be performed according to any suitable generation communication protocols, including, but not limited to, 1G, 2G, 2.5G, 2.75G, 3G, 4G, 4.5G, 5G communication protocols, and/or any other protocols either currently known or to be developed in the future.

In the following, different terms may refer to a same or similar network function or network node with the same or similar functionality in different communication systems. Thus, the specific terms used herein do not limit the present disclosure only to the communication system related to the specific terms, which however can be more generally applied to other communication systems.

FIG. 3 is a diagram showing an exemplary communication system into which an embodiment of the disclosure is applicable. As shown, the communication system comprises a user equipment (UE) 302, a radio access network (RAN) 304, a serving general packet radio service (GPRS) support node (SGSN) 306, a mobility management entity (MME) 308, a serving gateway (SGW) 310, a gateway GPRS support node (GGSN)/packet data network (PDN) gateway (PGW) 312, a service capability exposure function (SCEF) 314, a service capability server (SCS) 316, an application server (AS) 318 and a home subscriber server (HSS) 320. Note that the number of each entity mentioned above may be more than one.

The UE 302 can communicate through a radio access communication link with the RAN 304. The UE may also be referred to as, for example, terminal device, access terminal, mobile station, mobile unit, subscriber station, or the like. It may refer to any end device that can access a wireless communication network and receive services therefrom. By way of example and not limitation, the UE may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

In an Internet of things (IoT) scenario, a UE may represent a machine or other device that performs monitoring and/or measurements, and transmits the results of such monitoring and/or measurements to another UE and/or a network equipment. In this case, the UE may be a machine-to-machine (M2M) device, which may, in a 3GPP context, be referred to as a machine-type communication (MTC) device. Particular examples of such machines or devices may include sensors, metering devices such as power meters, industrial machineries, bikes, vehicles, or home or personal appliances, e.g. refrigerators, televisions, personal wearables such as watches, and so on.

The RAN 304 may include, for example, a universal mobile telecommunications system (UMTS) terrestrial RAN (UTRAN), a global system for mobile communication (GSM) enhanced data rate for GSM evolution (EDGE) RAN (GERAN), and/or an evolved universal terrestrial RAN (E-UTRAN). The UTRAN and the GERAN can each include radio network controller (RNC) nodes to control communications through radio base stations providing radio access communication links to UEs that are within their respective communication service cells. The E-UTRAN can include radio base station nodes (eNodeBs or eNBs) that can provide the combined functionality of the RNC nodes and base stations of the UTRAN and the GERAN.

The SGSN 306 is a core network node in the UMTS and has a user-plane function and a control-plane function. The user-plane function of the SGSN 306 can transfer user data packets of the UE 302 between the RAN 304 and the GGSN/PGW 312. The control-plane function of the SGSN 306 can carry out mobility management of the UE 302, bearer management and the like. The MME 308 is a core network node in evolved packet system (EPS) and can carry out the mobility management of the UE 302, the bearer management, and the like. The SGW 310 is a packet transfer node in the core network of the EPS. The SGW 310 can transfer user data packets of the UE 302 between the RAN 304 and the GGSN/PGW 312.

The GGSN is a core network node in the UMTS. The PGW is a core network node in the EPS. The GGSN/PGW 312 means either the GGSN or the PGW or both. The GGSN/PGW 312 is a user-plane packet transfer node in the core network and can transfer user data packets of the UE 302. The GGSN/PGW 312 can serve as a gateway to an external PDN and provide the UE 302 with the connectivity to the external PDN.

The SCEF 314 can securely expose the services and capabilities provided by 3GPP networks by providing access to the services and capabilities through homogenous network application programming interfaces (APIs) defined by open mobile alliance (OMA), GSM alliance (GSMA) and possibly other standardization bodies. The SCS 316 can make open service access (OSA) standard interfaces accessible by application and provide an abstraction of network protocol for application developers. As a gateway between applications and the network, the SCS 320 can accomplish mapping of OSA interfaces onto network protocols and vice versa. The AS 318 may be a type of server designed to install, operate and host applications and associated services for users. The HSS 320 is a control-plane node in the core network of 3GPP public land mobile network (PLMN) and can manage subscriber information of the UE 302.

As shown in FIG. 3, the communication system may further comprise a mobile switching center (MSC) 322, a short message service (SMS)-service center (SC)/gateway mobile switching center (GMSC)/interworking MSC (IWMSC) 324, a short message entity (SME) 326, an IP-short message (SM)-gateway (GW) 328, a machine-type communication (MTC)-interworking function (IWF) 330, a charge data function (CDF)/charge gateway function (CGF) 332 and an MTC-authentication, authorization and accounting (AAA) 334. It should be noted that the SCEF 314, the SCS 316 and the AS 318 are merely exemplary examples of the components in the communication system and may be replaced by components with similar functionalities. For example, in 5G system, the SCEF may be replaced by a network exposure function (NEF), and the SCS/AS may be replaced by an application function (AF).

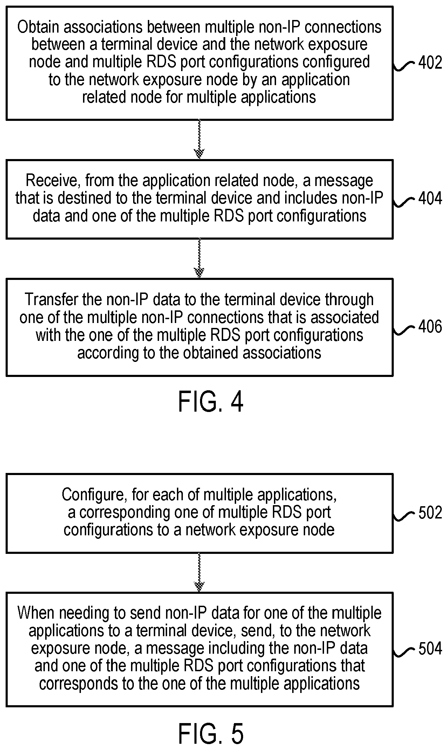

FIG. 4 is a flowchart illustrating a method implemented at a network exposure node according to an embodiment of the disclosure. The network exposure node may be an SCEF, an NEF, or any other entity having similar functionality. At block 402, the network exposure node obtains associations between multiple non-IP connections between a terminal device and the network exposure node and multiple RDS port configurations configured to the network exposure node by an application related node for multiple applications. For example, the non-IP connection may be a non-IP PDN connection or an unstructured PDU session. Each of the multiple non-IP connections may be identified by an EPS bearer identity (EBI) or a PDU session identifier. The application related node may be an SCS, an AS, an AF, or any other entity having similar functionality. Each of the multiple RDS port configurations may comprise a first RDS port for use by the network exposure node and a second RDS port for use by the terminal device.

Each of the multiple RDS port configurations may be configured to the network exposure node through static RDS configuration or dynamic RDS management. The static RDS configuration may be performed by receiving a request for NIDD configuration from the application related node. That is, if all of the multiple RDS port configurations are configured through static RDS configuration, the request for NIDD configuration may contain the multiple RDS port configurations. Regarding the dynamic RDS management, various port management procedures (similar to the dynamic RDS port procedure as described in clause 5.4.2.6 of TS 24.250 V16.0.0) may be used by the application related node to request the network exposure node to manage (e.g. reserve) a RDS port configuration, and the network exposure node in turn requests the terminal device to manage (e.g. reserve) a RDS port configuration as described in clause 5.4.2.6 of TS 24.250 V16.0.0. It is also possible that the multiple RDS port configurations are configured partly through static RDS configuration and partly through dynamic RDS management.

Each of the multiple RDS port configurations may correspond to one of the multiple applications. This correspondence may be preconfigured in a terminal device related to the multiple applications before the terminal device leaves the factory. Alternatively, this correspondence may be configured to the terminal device by the network exposure node through dynamic RDS management as described in clause 5.4.2.6 of TS 24.250 V16.0.0. It is also possible that this correspondence is configured to the terminal device partly through preconfiguration and partly through dynamic RDS management.

There may be two options for the implementation of block 402. As the first option, an establishment of a non-IP connection among the multiple non-IP connections may be initiated from the terminal device without a trigger sent by the network exposure node to the terminal device. For example, this may be the case that the terminal device has MO NIDD data to send and thus establishes the non-IP connection. In this case, the association between the non-IP connection and at least one RDS port configuration among the multiple RDS port configurations may be obtained by receiving the at least one RDS port configuration from the terminal device through the non-IP connection. If acknowledged mode is to be used between the terminal device and the network exposure node, the at least one RDS port configuration may be received in a RDS command for setting acknowledged mode. If unacknowledged mode is to be used, the at least one RDS port configuration may be received in a RDS message in unacknowledged mode.

As the second option, an establishment of a non-IP connection among the multiple non-IP connections may be initiated from the terminal device with a trigger sent by the network exposure node to the terminal device. For example, this may be the case that the network exposure node receives from the application related node MT NIDD data destined to a terminal device. But there has been not any non-IP connection established between the terminal device and the network exposure node. Thus, the network exposure node may send a trigger (e.g. a short message) to the terminal device. In this case, the association between the non-IP connection and at least one RDS port configuration among the multiple RDS port configurations may be obtained by sending the at least one RDS port configuration to the terminal device through the non-IP connection. If acknowledged mode is to be used between the network exposure node and the terminal device, the at least one RDS port configuration may be sent in a RDS command for setting acknowledged mode and a response for accepting the setting may be received from the terminal device. If unacknowledged mode is to be used, the at least one RDS port configuration may be sent in a RDS message in unacknowledged mode.

At block 404, the network exposure node receives, from the application related node, a message that is destined to the terminal device and includes non-IP data and one of the multiple RDS port configurations. At block 406, the network exposure node transfers the non-IP data to the terminal device through one of the multiple non-IP connections that is associated with the one of the multiple RDS port configurations according to the obtained associations. In this way, the correct non-IP connection can be chosen for MT NIDD in the case of multiple non-IP connections anchored in the same network exposure node.

FIG. 5 is a flowchart illustrating a method implemented at an application related node according to an embodiment of the disclosure. The application related node may be an SCS, an AS, an AF, or any other entity having similar functionality. At block 502, the application related node configures, for each of multiple applications, a corresponding one of multiple RDS port configurations to a network exposure node. Each of the multiple RDS port configurations may comprise a first RDS port for use by the network exposure node and a second RDS port for use by the terminal device. The network exposure node may be an SCEF, an NEF, or any other entity having similar functionality. Each of the multiple RDS port configurations may be configured to the network exposure node through static RDS configuration or dynamic RDS management. The details about the configuring have been described above with respect to block 402 and thus are omitted here.

At block 504, when the application related node needs to send non-IP data for one of the multiple applications to a terminal device, the application related node sends, to the network exposure node, a message including the non-IP data and one of the multiple RDS port configurations that corresponds to the one of the multiple applications. Since the corresponding RDS port configuration is sent to the network exposure node, the correct non-IP connection can be chosen by the network exposure node for MT NIDD in the case of multiple non-IP connections anchored in the same network exposure node.

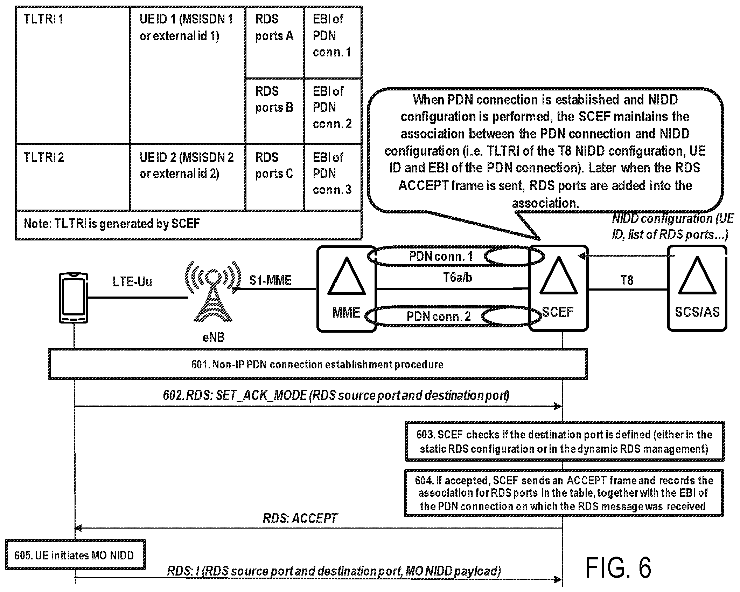

FIG. 6 is a flowchart illustrating an exemplary process according to an embodiment of the disclosure. As shown, in this exemplary process, the network exposure node is an SCEF and the application related node is an SCS/AS. The UE has MO NIDD data to send and thus establishes PDN connection 1 and PDN connection 2. Since the two PDN connections have the same APN, they are both anchored in the same SCEF. The SCS/AS sends, to the SCEF, NIDD configuration containing multiple RDS port configurations which take the form of a list of RDS ports. Note that the RDS ports may also be dynamically managed via the RDS protocol as described in TS 24.250. Also note that the NIDD configuration can be done before or after the PDN connection establishment.

Take PDN connection 1 as an example. Note that the following description for PDN connection 1 may be similarly applicable to PDN connection 2. When PDN connection 1 is established at block 601 and NIDD configuration is performed, the SCEF maintains the association between PDN connection 1 and the NIDD configuration (i.e. TLTRI 1 of the T8 NIDD configuration, UE ID 1 and EBI of PDN connection 1). At block 602, the UE initiates RDS with acknowledged (ack.) mode setup by sending a SET_ACK_MODE command which contains RDS source port and destination port. Suppose these two ports are called RDS ports A. At block 603, the SCEF may check if the destination port is defined (either in the static RDS configuration or in the dynamic RDS management). If accepted, at block 604, the SCEF sends a RDS ACCEPT frame and records the association for RDS ports A in the table, together with the EBI of PDN connection 1 on which the RDS message was received. That is, the RDS ports is added into the association when the RDS ACCEPT frame is sent. At block 605, the UE initiates MO NIDD to the SCEF by sending a RDS information (I) frame through PDN connection 1. The RDS I frame contains RDS ports A and MO NIDD payload.

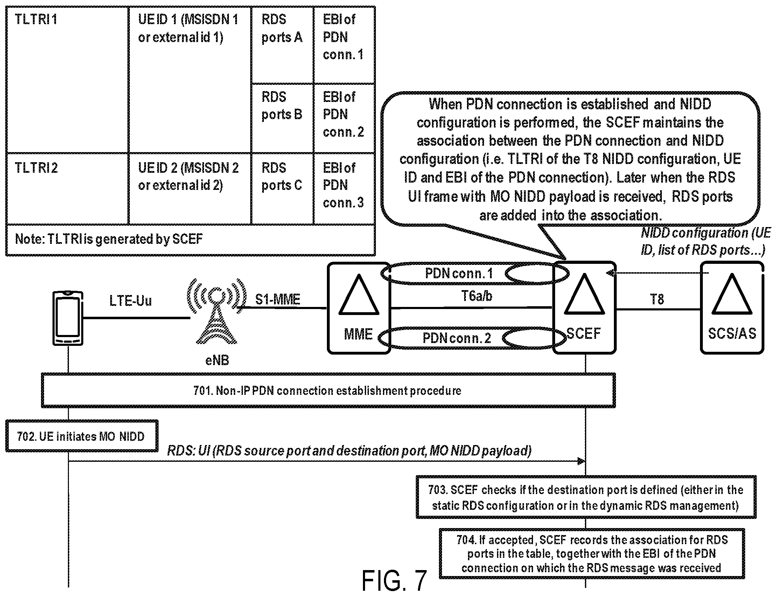

FIG. 7 is a flowchart illustrating an exemplary process according to an embodiment of the disclosure. The difference between the processes shown in FIGs. 6 and 7 mainly lies in that unacknowledged mode is used between the UE and the SCEF. Also take PDN connection 1 as an example. When PDN connection 1 is established at block 701 and NIDD configuration is performed, the SCEF maintains the association between PDN connection 1 and the NIDD configuration (i.e. TLTRI 1 of the T8 NIDD configuration, UE ID 1 and EBI of PDN connection 1). At block 702, the UE initiates RDS with unacknowledged (unack.) mode by sending a RDS unacknowledged information (UI) frame which contains RDS source port and destination port and MO NIDD payload. Suppose these two ports are called RDS ports A. At block 703, the SCEF may check if the destination port is defined (either in the static RDS configuration or in the dynamic RDS management). If accepted, at block 704, the SCEF records the association for RDS ports A in the table, together with the EBI of PDN connection 1 on which the RDS message was received. That is, the RDS ports is added into the association when the RDS UI frame with MO NIDD payload is received.

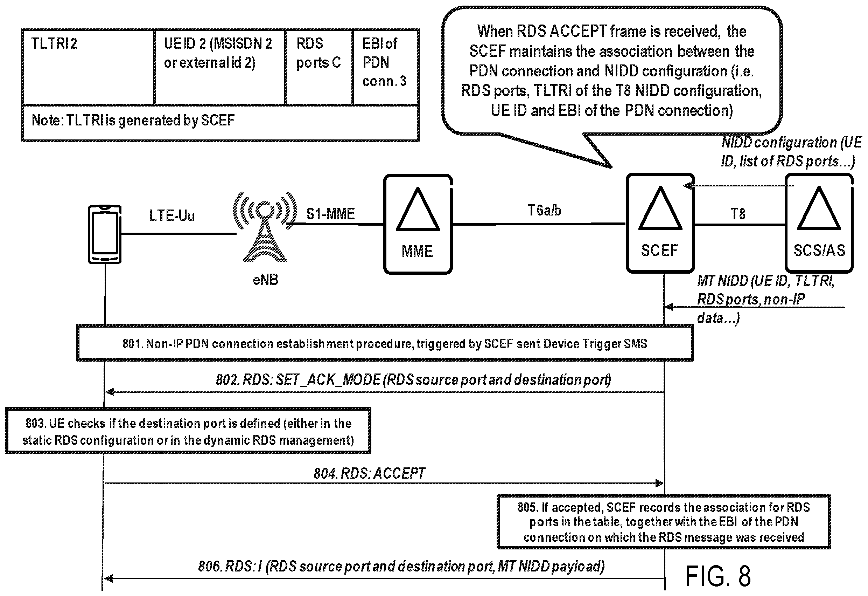

FIG. 8 is a flowchart illustrating an exemplary process according to an embodiment of the disclosure. As shown, the SCS/AS sends, to the SCEF, NIDD configuration containing multiple RDS port configurations which take the form of a list of RDS ports. Note that the RDS ports may also be dynamically managed via the RDS protocol as described in TS 24.250. In this exemplary process, no PDN connection exists initially between the UE and the SCEF. The SCS/AS has non-IP data for an application to send to the UE. Suppose the application corresponds to RDS ports C. Then, the SCS/AS initiates MT NIDD to the SCEF. The MT NIDD contains the non-IP data and RDS ports C. Since no PDN connection exists, the SCEF may send a device trigger short message to the UE. In response to the short message, the UE establishes PDN connection 3 at block 801.

At block 802, the SCEF initiates RDS with ack. mode setup by sending a SET_ACK_MODE command which contains RDS ports C. At block 803, the UE may check if the destination port is defined (either in the static RDS configuration or in the dynamic RDS management). If accepted, the UE may send a RDS ACCEPT frame to the SCEF at block 804. If accepted, the SCEF may record, at block 805, the association for RDS ports C in the table, together with the EBI of PDN connection 3 on which the RDS message was received. That is, when the RDS ACCEPT frame is received, the SCEF maintains the association between the PDN connection and the NIDD configuration (i.e. RDS ports C, TLTRI 2 of the T8 NIDD configuration, UE ID 2 and EBI of PDN connection 3). At block 806, the SCEF initiates MT NIDD to the UE by sending a RDS I frame through PDN connection 3. The RDS I frame contains RDS ports C and MT NIDD payload.

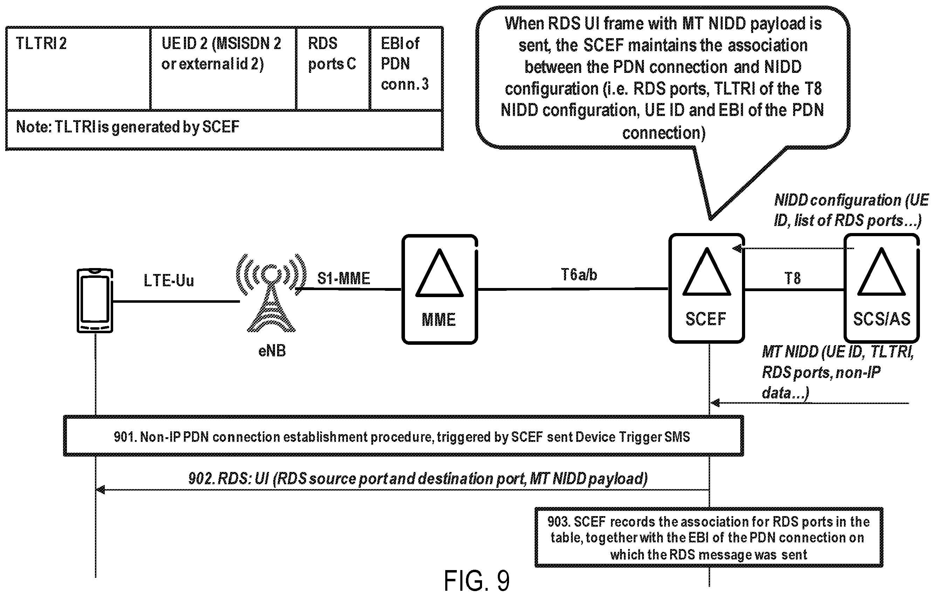

FIG. 9 is a flowchart illustrating an exemplary process according to an embodiment of the disclosure. The difference between the processes shown in FIGs. 8 and 9 mainly lies in that unacknowledged mode is used between the SCEF and the UE. Similar to FIG. 8, in response to a device trigger short message, the UE establishes PDN connection 3 at block 901. At block 902, the SCEF initiates RDS with unack. mode by sending a RDS UI frame which contains RDS ports C and MT NIDD payload. At block 903, the SCEF records the association for RDS ports C in the table, together with the EBI of PDN connection 3 on which the RDS message was sent. That is, when the RDS UI frame with MT NIDD payload is sent, the SCEF may maintain the association between PDN connection 3 and the NIDD configuration (i.e. RDS ports C, TLTRI 2 of the T8 NIDD configuration, UE ID 2 and EBI of PDN connection 3). It should be noted that two blocks shown in succession in the figures may, in fact, be executed substantially concurrently, or the blocks may sometimes be executed in the reverse order, depending upon the functionality involved.

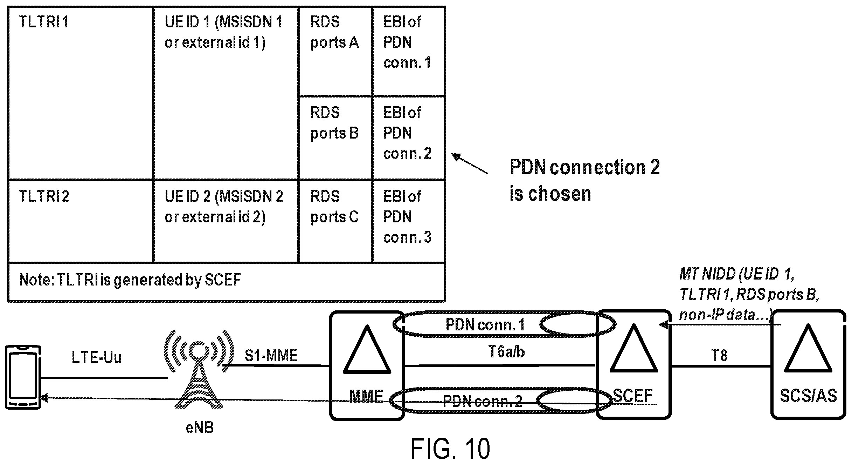

FIG. 10 is a diagram illustrating an exemplary process according to an embodiment of the disclosure. As shown in the table, the SCEF has maintained the associations between PDN connections and NIDD configurations. In this exemplary process, the SCS/AS has non-IP data for an application to send to the UE. Suppose the application corresponds to RDS ports B. Then, the SCS/AS initiates MT NIDD to the SCEF. The MT NIDD contains the non-IP data and RDS ports B. From the received RDS ports B, the SCEF may determine that the received RDS ports B correspond to PDN connection 2, according to the maintained associations. Thus, the SCEF chooses PDN connection 2 to transfer the MT NIDD payload to the UE.

According to the description above, the following changes may be made to the current technical specifications. In evolved packet core (EPC), for the case of multiple PDN connections of an APN, the RDS shall be used. The SCEF will, in addition, use the RDS application ports for the binding correlation between the non-IP PDN connection and NIDD configuration. In 5GC, for the case of multiple PDU sessions of an DNN and NSSAI, the RDS shall be used. The NEF will, in addition, use the RDS application ports for the binding correlation between the unstructured PDU session and NIDD configuration.

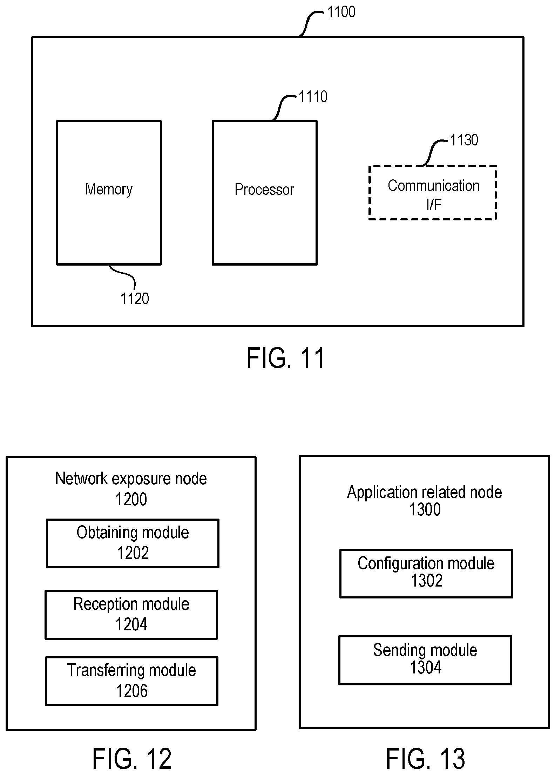

FIG. 11 is a block diagram showing an apparatus suitable for use in practicing some embodiments of the disclosure. For example, any one of the network exposure node, the LwM2M client, the LwM2M server and the management entity described above may be implemented through the apparatus 1100. As shown, the apparatus 1100 may include a processor 1110, a memory 1120 that stores a program, and optionally a communication interface 1130 for communicating data with other external devices through wired and/or wireless communication.

The program includes program instructions that, when executed by the processor 1110, enable the apparatus 1100 to operate in accordance with the embodiments of the present disclosure, as discussed above. That is, the embodiments of the present disclosure may be implemented at least in part by computer software executable by the processor 1110, or by hardware, or by a combination of software and hardware.

The memory 1120 may be of any type suitable to the local technical environment and may be implemented using any suitable data storage technology, such as semiconductor based memory devices, flash memories, magnetic memory devices and systems, optical memory devices and systems, fixed memories and removable memories. The processor 1110 may be of any type suitable to the local technical environment, and may include one or more of general purpose computers, special purpose computers, microprocessors, digital signal processors (DSPs) and processors based on multi-core processor architectures, as non-limiting examples.

FIG. 12 is a block diagram showing a network exposure node according to an embodiment of the disclosure. As shown, the network exposure node 1200 comprises an obtaining module 1202, a reception module 1204 and a transferring module 1206. The obtaining module 1202 may be configured to obtain associations between multiple non-IP connections between a terminal device and the network exposure node and multiple RDS port configurations configured to the network exposure node by an application related node for multiple applications, as described above with respect to block 402. The reception module 1204 may be configured to receive, from the application related node, a message that is destined to the terminal device and includes non-IP data and one of the multiple RDS port configurations, as described above with respect to block 404. The transferring module 1206 may be configured to transfer the non-IP data to the terminal device through one of the multiple non-IP connections that is associated with the one of the multiple RDS port configurations according to the obtained associations, as described above with respect to block 406.

FIG. 13 is a block diagram showing an application related node according to an embodiment of the disclosure. As shown, the application related node 1300 comprises a configuration module 1302 and a sending module 1304. The configuration module 1302 may be configured to configure, for each of multiple applications, a corresponding one of multiple RDS port configurations to a network exposure node, as described above with respect to block 502. The sending module 1304 may be configured to, when the application related node needs to send non-IP data for one of the multiple applications to a terminal device, send, to the network exposure node, a message including the non-IP data and one of the multiple RDS port configurations that corresponds to the one of the multiple applications, as described above with respect to block 504. The modules described above may be implemented by hardware, or software, or a combination of both.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

Although the invention has been explained in relation to its preferred embodiment(s) as mentioned above, it is to be understood that many other possible modifications and variations can be made without departing from the scope of the present invention, which is defined by the claims.

## Claims

1. A method in a network exposure node comprising:
obtaining (402) associations between multiple non-Internet protocol, IP, connections between a terminal device and the network exposure node and multiple reliable data service, RDS, port configurations configured to the network exposure node by an application related node for multiple applications;
receiving (404), from the application related node, a message that is destined to the terminal device and includes non-IP data and one of the multiple RDS port configurations; and
transferring (406) the non-IP data to the terminal device through one of the multiple non-IP connections that is associated with the one of the multiple RDS port configurations according to the obtained associations.

2. The method according to claim 1, wherein an establishment of a non-IP connection among the multiple non-IP connections is initiated from the terminal device without a trigger sent by the network exposure node to the terminal device; and
wherein the association between the non-IP connection and at least one RDS port configuration among the multiple RDS port configurations is obtained by receiving the at least one RDS port configuration from the terminal device through the non-IP connection;
and, optionally:
wherein the at least one RDS port configuration is received in one of:
a RDS command for setting acknowledged mode; and
a RDS message in unacknowledged mode.

3. The method according to claim 1, wherein an establishment of a non-IP connection among the multiple non-IP connections is initiated from the terminal device with a trigger sent by the network exposure node to the terminal device; and
wherein the association between the non-IP connection and at least one RDS port configuration among the multiple RDS port configurations is obtained by sending the at least one RDS port configuration to the terminal device through the non-IP connection;
and, optionally:
wherein the at least one RDS port configuration is sent in a RDS command for setting acknowledged mode and wherein a response for accepting the setting is received from the terminal device; or
wherein the at least one RDS port configuration is sent in a RDS message in unacknowledged mode.

4. The method according to any of claims 1 to 3, wherein each of the multiple RDS port configurations is configured to the network exposure node through static RDS configuration or dynamic RDS management.

5. The method according to claim 4, wherein the static RDS configuration is performed by receiving a request for non-IP data delivery, NIDD, configuration from the application related node;
and, optionally:
wherein each of the multiple RDS port configurations comprises a first RDS port for use by the network exposure node and a second RDS port for use by the terminal device.

6. The method according to any of claims 1 to 5, wherein each of the multiple non-IP connections is identified by one of:
an evolved packet system, EPS, bearer identity, EBI; and
a protocol data unit, PDU, session identifier.

7. The method according to any of claims 1 to 6, wherein the network exposure node is a service capability exposure function, SCEF, or a network exposure function, NEF;
wherein the application related node is one of: a service capability server, SCS; an application server, AS; and an application function, AF; and
wherein a non-IP connection is a non-IP packet data network, PDN, connection, or an unstructured PDU session.

8. A method in an application related node comprising:
configuring (502), for each of multiple applications, a corresponding one of multiple reliable data service, RDS, port configurations to a network exposure node; and
when the application related node needs to send non-Internet protocol, IP, data for one of the multiple applications to a terminal device, sending (504), to the network exposure node, a message including the non-IP data and one of the multiple RDS port configurations that corresponds to the one of the multiple applications.

9. The method according to claim 8, wherein each of the multiple RDS port configurations is configured to the network exposure node through static RDS configuration or dynamic RDS management.

10. The method according to claim 9, wherein the static RDS configuration is performed by sending a request for non-IP data delivery, NIDD, configuration to the network exposure node.

11. The method according to any of claims 8 to 10, wherein each of the multiple RDS port configurations comprises a first RDS port for use by the network exposure node and a second RDS port for use by the terminal device.

12. The method according to any of claims 8 to 11, wherein the application related node is one of: a service capability server, SCS; an application server, AS; and an application function, AF; and
wherein the network exposure node is a service capability exposure function, SCEF, or a network exposure function, NEF.

13. A network exposure node (1100) comprising:
at least one processor (1110); and
at least one memory (1120), the at least one memory (1120) containing instructions executable by the at least one processor (1110), whereby the network exposure node (1100) is operative to perform the method according to any one of claims 1-7.

14. An application related node (1100) comprising:
at least one processor (1110); and
at least one memory (1120), the at least one memory (1120) containing instructions executable by the at least one processor (1110), whereby the application related node (1100) is operative to perform the method according to any one of claims 8-12.

15. A computer readable storage medium comprising instructions which when executed by at least one processor, cause the at least one processor to perform the method according to any of claims 1 to 12.

## Patentansprüche

1. Verfahren in einem Netzwerkdarlegungsknoten, umfassend:
Erhalten (402) von Zuordnungen zwischen mehreren Nicht-Internetprotokollverbindungen, Nicht-IP-Verbindungen, zwischen einer Endgerätevorrichtung und dem Netzwerkdarlegungsknoten und mehreren von einem anwendungsbezogenen Knoten für mehrere Anwendungen konfigurierten Portkonfigurationen für zuverlässige Datendienste, RDS;
Empfangen (404) einer Nachricht vom anwendungsbezogenen Knoten, die für die Endgerätevorrichtung bestimmt ist und Nicht-IP-Daten und eine der mehreren RDS-Portkonfigurationen umfasst; und
Übertragen (406) der Nicht-IP-Daten über eine der mehreren Nicht-IP-Verbindungen, die gemäß den erhaltenen Zuordnungen der einen der mehreren RDS-Portkonfigurationen zugeordnet ist, an die Endgerätevorrichtung.

2. Verfahren nach Anspruch 1, wobei eine Herstellung einer Nicht-IP-Verbindung unter den mehreren Nicht-IP-Verbindungen von der Endgerätevorrichtung ohne einen vom Netzwerkdarlegungsknoten an die Endgerätevorrichtungen gesendeten Auslöser initiiert wird; und
wobei die Zuordnung zwischen der Nicht-IP-Verbindung und der mindestens einen RDS-Portkonfiguration unter den mehreren RDS-Portkonfigurationen durch Empfangen der mindestens einen RDS-Portkonfiguration von der Endgerätevorrichtung über die Nicht-IP-Verbindung erhalten wird;
und optional:
wobei die mindestens eine RDS-Portkonfiguration in einem von Folgenden empfangen wird:
einem RDS-Befehl zum Einstellen eines bestätigten Modus; und
einer RDS-Nachricht in einem unbestätigten Modus.

3. Verfahren nach Anspruch 1, wobei eine Herstellung einer Nicht-IP-Verbindung unter den mehreren Nicht-IP-Verbindungen von der Endgerätevorrichtung mit einem vom Netzwerkdarlegungsknoten an die Endgerätevorrichtungen gesendeten Auslöser initiiert wird; und
wobei die Zuordnung zwischen der Nicht-IP-Verbindung und der mindestens einen RDS-Portkonfiguration unter den mehreren RDS-Portkonfigurationen durch Senden der mindestens einen RDS-Portkonfiguration über die Nicht-IP-Verbindung an die Endgerätevorrichtung erhalten wird;
und optional:
wobei die mindestens eine RDS-Portkonfiguration in einem RDS-Befehl zum Einstellen eines bestätigten Modus gesendet wird und wobei eine Antwort zum Annehmen der Einstellung von der Endgerätevorrichtung empfangen wird; oder
wobei die mindestens eine RDS-Portkonfiguration in einer RDS-Nachricht in einem unbestätigten Modus gesendet wird.

4. Verfahren nach einem der Ansprüche 1 bis 3, wobei jede der mehreren RDS-Portkonfigurationen durch eine statische RDS-Konfiguration oder eine dynamische RDS-Verwaltung für den Netzwerkdarlegungsknoten konfiguriert wird.

5. Verfahren nach Anspruch 4, wobei die statische RDS-Konfiguration durch Empfangen einer Anforderung für eine Nicht-IP-Daten-Zustellungskonfiguration, NDD-Konfiguration, vom anwendungsbezogenen Knoten durchgeführt wird;
und optional:
wobei jede der mehreren RDS-Portkonfigurationen einen ersten RDS-Port zur Verwendung durch den Netzwerkdarlegungsknoten und einen zweiten RDS-Port zur Verwendung durch die Endgerätevorrichtung umfasst.

6. Verfahren nach einem der Ansprüche 1 bis 5, wobei jede der mehreren Nicht-IP-Verbindungen durch eines von Folgenden identifiziert wird:
eine Trägeridentität, EBI, eines evolvierten Paketsystems, EPS; und
eine Protokolldateneinheitssitzungskennung, PDU-Sitzungskennung.

7. Verfahren nach einem der Ansprüche 1 bis 6, wobei der Netzwerkdarlegungsknoten eine Dienstfähigkeitsdarlegungsfunktion, SCEF, oder eine Netzwerkdarlegungsfunktion, NEF, ist;
wobei der anwendungsbezogene Knoten eines von Folgenden ist: ein Dienstfähigkeitsserver, SCS; ein Anwendungsserver, AS; und eine Anwendungsfunktion, AF; und
wobei eine Nicht-IP-Verbindung eine Nicht-IP-Paketdatennetzwerkverbindung, Nicht-IP-PDN-Verbindung, oder eine unstrukturierte PDU-Sitzung ist.

8. Verfahren in einem anwendungsbezogenen Knoten, umfassend:
Konfigurieren (502) einer entsprechenden von mehreren Portkonfigurationen für zuverlässige Datendienste, RDS, für einen Netzwerkdarlegungsknoten für jede von mehreren Anwendungen; und,
wenn der anwendungsbezogene Knoten Nicht-Internetprotokolldaten, Nicht-IP-Daten, für eine der mehreren Anwendungen an eine Endgerätevorrichtung senden muss, Senden (504) einer Nachricht an den Netzwerkdarlegungsknoten, die die Nicht-IP-Daten und eine der mehreren RDS-Portkonfigurationen umfasst, die der einen oder mehreren Anwendungen entspricht.

9. Verfahren nach Anspruch 8, wobei jede der mehreren RDS-Portkonfigurationen durch eine statische RDS-Konfiguration oder eine dynamische RDS-Verwaltung für den Netzwerkdarlegungsknoten konfiguriert wird.

10. Verfahren nach Anspruch 9, wobei die statische RDS-Konfiguration durch Senden einer Anforderung für eine Nicht-IP-Daten-Zustellungskonfiguration, NDD-Konfiguration, an den Netzwerkdarlegungsknoten durchgeführt wird.

11. Verfahren nach einem der Ansprüche 8 bis 10, wobei jede der mehreren RDS-Portkonfigurationen einen ersten RDS-Port zur Verwendung durch den Netzwerkdarlegungsknoten und einen zweiten RDS-Port zur Verwendung durch die Endgerätevorrichtung umfasst.

12. Verfahren nach einem der Ansprüche 8 bis 11, wobei der anwendungsbezogene Knoten eines von Folgenden ist: ein Dienstfähigkeitsserver, SCS; ein Anwendungsserver, AS; und eine Anwendungsfunktion, AF; und
wobei der Netzwerkdarlegungsknoten eine Dienstfähigkeitsdarlegungsfunktion, SCEF, oder eine Netzwerkdarlegungsfunktion, NEF, ist.

13. Netzwerkdarlegungsknoten (1100), umfassend:
mindestens einen Prozessor (1110); und
mindestens einen Speicher (1120), wobei der mindestens eine Speicher (1120) Anweisungen enthält, die von dem mindestens einen Prozessor (1110) ausgeführt werden können, wodurch der Netzwerkdarlegungsknoten (1100) zum Durchführen des Verfahrens nach einem der Ansprüche 1 bis 7 ausgelegt ist.

14. Anwendungsbezogener Knoten (1100), umfassend:
mindestens einen Prozessor (1110); und
mindestens einen Speicher (1120), wobei der mindestens eine Speicher (1120) Anweisungen enthält, die von dem mindestens einen Prozessor (1110) ausgeführt werden können, wodurch der anwendungsbezogene Knoten (1100) zum Durchführen des Verfahrens nach einem der Ansprüche 8 bis 12 ausgelegt ist.

15. Computerlesbares Speichermedium, das Anweisungen speichert, die bei Ausführung durch mindestens einen Prozessor den mindestens einen Prozessor zum Durchführen des Verfahrens nach einem der Ansprüche 1 bis 12 veranlassen.

## Revendications

1. Procédé dans un noeud d'exposition de réseau comprenant :
l'obtention (402) d'associations entre de multiples connexions non protocole Internet, IP, entre un dispositif terminal et le noeud d'exposition de réseau et de multiples configurations de port de services de données fiables, RDS, configurées au noeud d'exposition de réseau par un noeud lié à des applications pour de multiples applications ;
la réception (404), depuis le noeud lié à des applications, d'un message qui est destiné au dispositif terminal et comprend des données non IP et l'une des multiples configurations de port RDS ; et
le transfert (406) des données non IP au dispositif terminal via l'une des multiples connexions non IP qui est associée à l'une des multiples configurations de port RDS en fonction des associations obtenues.

2. Procédé selon la revendication 1, dans lequel un établissement d'une connexion non IP parmi les multiples connexions non IP est initié à partir du dispositif terminal sans aucun déclenchement envoyé par le noeud d'exposition de réseau au dispositif terminal ; et
dans lequel l'association entre la connexion non IP et au moins une configuration de port RDS parmi les multiples configurations de port RDS est obtenue par la réception de l'au moins une configuration de port RDS depuis le dispositif terminal via la connexion non IP ;
et, facultativement :
dans lequel au moins une configuration de port RDS est reçue dans l'un parmi :
une commande RDS pour définir un mode avec accusé de réception ; et
un message RDS dans un mode sans accusé de réception.

3. Procédé selon la revendication 1, dans lequel un établissement d'une connexion non IP parmi les multiples connexions non IP est initié à partir du dispositif terminal avec un déclenchement envoyé par le noeud d'exposition de réseau au dispositif terminal ; et dans lequel l'association entre la connexion non IP et au moins une configuration de port RDS parmi les multiples configurations de port RDS est obtenue par l'envoi de l'au moins une configuration de port RDS au dispositif terminal via la connexion non IP ;
et, facultativement :
dans lequel l'au moins une configuration de port RDS est envoyée dans une commande RDS pour définir un mode avec accusé de réception et dans lequel une réponse pour accepter la définition est reçue depuis le dispositif terminal ; ou
dans lequel au moins une configuration de port RDS est envoyée dans un message RDS dans un mode sans accusé de réception.

4. Procédé selon l'une quelconque des revendications 1 à 3, dans lequel chacune des multiples configurations de port RDS est configurée au noeud d'exposition de réseau via une configuration RDS statique ou une gestion RDS dynamique.

5. Procédé selon la revendication 4, dans lequel la configuration RDS statique est réalisée par la réception d'une demande de configuration de distribution de données non IP, NIDD, depuis le noeud lié à des applications ;
et, facultativement :
dans lequel chacune des multiples configurations de port RDS comprend un premier port RDS destiné à être utilisé par le noeud d'exposition de réseau et un deuxième port RDS destiné à être utilisé par le dispositif terminal.

6. Procédé selon l'une quelconque des revendications 1 à 5, dans lequel chacune des multiples connexions non IP est identifiée par l'un parmi :
une identité de support de système de paquets évolué, EPS, EBI ; et
un identifiant de session d'unité de données de protocole, PDU.

7. Procédé selon l'une quelconque des revendications 1 à 6, dans lequel le noeud d'exposition de réseau est une fonction d'exposition de capacité de service, SCEF, ou une fonction d'exposition de réseau, NEF ;
dans lequel le noeud lié à des applications est l'un parmi : un serveur de capacité de service, SCS ; un serveur d'applications, AS ; et une fonction d'application, AF ; et
dans lequel une connexion non IP est une connexion de réseau de données en paquets, PDN, non IP ou une session PD non structurée.

8. Procédé dans un noeud lié à des applications comprenant :
la configuration (502), pour chacune de multiples applications, de l'une correspondante de multiples configurations de port de services de données fiables, RDS, à un noeud d'exposition de réseau ; et
lorsque le noeud lié à des applications a besoin d'envoyer des données non protocole Internet, IP, pour l'une des multiples applications à un dispositif terminal, l'envoi (504), au noeud d'exposition de réseau, d'un message comprenant les données non IP et l'une des multiples configurations de port RDS correspondant à l'une des multiples applications.

9. Procédé selon la revendication 8, dans lequel chacune des multiples configurations de port RDS est configurée au noeud d'exposition de réseau via une configuration RDS statique ou une gestion RDS dynamique.

10. Procédé selon la revendication 9, dans lequel la configuration RDS statique est réalisée par l'envoi d'une demande de configuration de distribution de données non IP, NIDD, au noeud d'exposition de réseau.

11. Procédé selon l'une quelconque des revendications 8 à 10, dans lequel chacune des multiples configurations de port RDS comprend un premier port RDS destiné à être utilisé par le noeud d'exposition de réseau et un deuxième port RDS destiné à être utilisé par le dispositif terminal.

12. Procédé selon l'une quelconque des revendications 8 à 11, dans lequel le noeud lié à des applications est l'un parmi : un serveur de capacité de service, SCS ; un serveur d'applications, AS ; et une fonction d'application, AF ; et
dans lequel le noeud d'exposition de réseau est une fonction d'exposition de capacité de service, SCEF, ou une fonction d'exposition de réseau, NEF.

13. Noeud d'exposition de réseau (1100) comprenant :
au moins un processeur (1110) ; et
au moins une mémoire (1120), l'au moins une mémoire (1120) contenant des instructions exécutables par l'au moins un processeur (1110), de telle manière que le noeud d'exposition de réseau (1100) soit fonctionnel pour réaliser le procédé selon l'une quelconque des revendications 1 à 7.

14. Noeud lié à des applications (1100) comprenant :
au moins un processeur (1110) ; et
au moins une mémoire (1120), l'au moins une mémoire (1120) contenant des instructions exécutables par l'au moins un processeur (1110), de telle manière que le noeud lié à des applications (1100) soit fonctionnel pour réaliser le procédé selon l'une quelconque des revendications 8 à 12.

15. Support de stockage lisible par ordinateur comprenant des instructions qui, lorsqu'elles sont exécutées par au moins un processeur, amènent l'au moins un processeur à réaliser le procédé selon l'une quelconque des revendications 1 à 12.
